# EUROPÄISCHE PATENTANMELDUNG

(11) **EP 4 509 305 A1**
(43) Veröffentlichungstag der Anmeldung: **19.02.2025**
(21) Anmeldenummer: 23191633.9
(22) Anmeldetag: 16.08.2023
(51) Int. Cl.: B32B 7/12, B32B 27/08, B32B 27/32

(54) **FOLIE ZUR BILDUNG EINES PLATTENMATERIALS UND PLATTENMATERIAL**

(71) Anmelder: Profol GmbH, 83128 Halfing (DE)
(72) Erfinder: PRASSBERGER, Maximilian, 83128 Halfing (DE)
(74) Vertreter: Hoffmann Eitle

(57) **Zusammenfassung**

Folie zur Bildung eines Plattenmaterials durch Aufbringen der Folie auf ein Substrat, wobei die Folie umfasst eine Dekorschichtgruppe umfassend eine Verbindungsschicht, welche mit dem Substrat zur Bildung des Plattenmaterials verbunden wird, eine Dekorgrundschicht auf der Verbindungsschicht, eine Dekorträgerschicht auf der Dekorgrundschicht, und eine Dekorschicht auf der Dekorträgerschicht; eine Verschleißschutzgruppe auf der Dekorschicht der Dekorschichtgruppe, umfassend eine weitere Verbindungsschicht auf der Dekorschicht, eine transparente Grundschicht auf der weiteren Verbindungsschicht, und eine geprägte Oberflächenschicht auf der transparenten Grundschicht; sowie eine Lackschicht auf der geprägten Oberflächenschicht der Verschleißschutzgruppe.

## Beschreibung

### Technisches Gebiet

Die vorliegende Erfindung betrifft eine Folie zur Bildung eines Plattenmaterials durch Aufbringen der Folie auf ein Substrat, insbesondere aus einem gegenüber der Folie steifen Material. Die Erfindung betrifft des Weiteren ein solches Plattenmaterial, insbesondere ein Fußbodenelement.

### Technologischer Hintergrund

Plattenmaterialen finden breite Anwendung als Bau-, Einrichtungs-, Dekor- und Konstruktionsmaterial. Dabei werden derartige Plattenmaterialien oft in Form sog. Laminate bereitgestellt, bei welchen eine Laminatschicht ein Substrat bedeckt. Die Laminatschicht stellt dabei die gewünschte Optik und die gewünschten Eigenschaften der Oberfläche bereit, wobei das Substrat die mechanische Stabilität bereitstellt. Damit können die Anforderungen an die Oberfläche von den mechanischen Anforderungen getrennt werden und es ergeben sich so vielerlei Vorteile hinsichtlich Effizienz, Kosten, Gewicht u. A.

Die Anforderungen an die Oberfläche von derartigem Plattenmaterial umfassen dabei nicht nur optische Anforderungen hinsichtlich eines zu erzielenden optischen und visuellen Eindrucks, sondern auch haptische Eigenschaften und insbesondere auch Abriebfestigkeit und Widerstandsfähigkeit. Die erstgenannten Eigenschaften sollen dabei nicht nur tastbar erfassbare Eigenschaften, sondern auch generell die Eigenschaften der Oberflächenstruktur umfassen. Die letztgenannten Eigenschaften betreffen insgesamt den Abrieb durch Verwendung des Plattenmaterials, so bspw. auch den Abrieb durch den Gebrauch des Plattenmaterials, insbesondere in Form oder als Teil eines Fußbodens.

Die vorgenannten Ziele können nicht immer alle zusammen in einem zufriedenstellenden Maße erreicht werden. Insbesondere die Bereitstellung von hochqualitativen Mustern bei zufriedenstellender Widerstandsfähigkeit und akzeptabler Herstellungskosten ist oft eine Herausforderung. Es ist daher Aufgabe der vorliegenden Erfindung, eine Folie zur Bildung eines Plattenmaterials durch Aufbringen der Folie auf ein Substrat bereitzustellen, welche hochqualitatives Dekor mit hoher Abriebfestigkeit bei kosteneffizienter Herstellung vereint. Es ist ferner Aufgabe der vorliegenden Erfindung, ein entsprechendes Plattenmaterial, insbesondere in Form eines Fußbodenelements bereitzustellen.

### Zusammenfassung

Die genannten Aufgaben werden durch eine Folie zur Bildung eines Plattenmaterials durch Aufbringen der Folie auf ein Substrat gemäß dem Patentanspruch 1 und einem Plattenmaterial gemäß Patentanspruch 16 gelöst. Weitere vorteilhafte Ausgestaltungen der vorliegenden Erfindung sind in den abhängigen Patenansprüchen angegeben.

Demgemäß ist eine Folie zur Bildung eines Plattenmaterials durch Aufbringen der Folie auf ein Substrat vorgesehen, wobei die Folie umfasst eine Dekorschichtgruppe umfassend eine Verbindungsschicht, welche mit dem Substrat zur Bildung des Plattenmaterials verbunden wird, eine Dekorgrundschicht auf der Verbindungsschicht, eine Dekorträgerschicht auf der Dekorgrundschicht, und eine Dekorschicht auf der Dekorträgerschicht; eine Verschleißschutzgruppe auf der Dekorschicht der Dekorschichtgruppe, umfassend eine weitere Verbindungsschicht auf der Dekorschicht, eine transparente Grundschicht auf der weiteren Verbindungsschicht, und eine geprägte Oberflächenschicht auf der transparenten Grundschicht; sowie eine Lackschicht auf der geprägten Oberflächenschicht der Verschleißschutzgruppe.

Des Weiteren ist ein Plattenmaterial vorgesehen, welches eine Folie nach einem der hier beschriebenen Ausführungsformen, sowie ein Substrat aus einem Material mit einer gegenüber der Folie größeren Steifigkeit umfasst.

### Kurze Beschreibung der Zeichnungen

Ausführungsformen der vorliegenden Erfindungen werden nun anhand der folgenden Figuren näher beschrieben. Die entsprechende Darstellung dient dabei lediglich des besseren Verständnisses der erfindungsgemäßen Lehre und der damit im Zusammenhang stehenden Vorteile, soll aber an keiner Stelle einschränkend verstanden werden. Es zeigen:
- Figur 1: schematisch den prinzipiellen Aufbau einer Folie gemäß einer Ausführungsform der vorliegenden Erfindung;
und
- Figuren 2A & 2B: schematisch den prinzipiellen Aufbau eines Plattenmaterials mit einer Folie gemäß einer Ausführungsform der vorliegenden Erfindung.

### Detaillierte Beschreibung

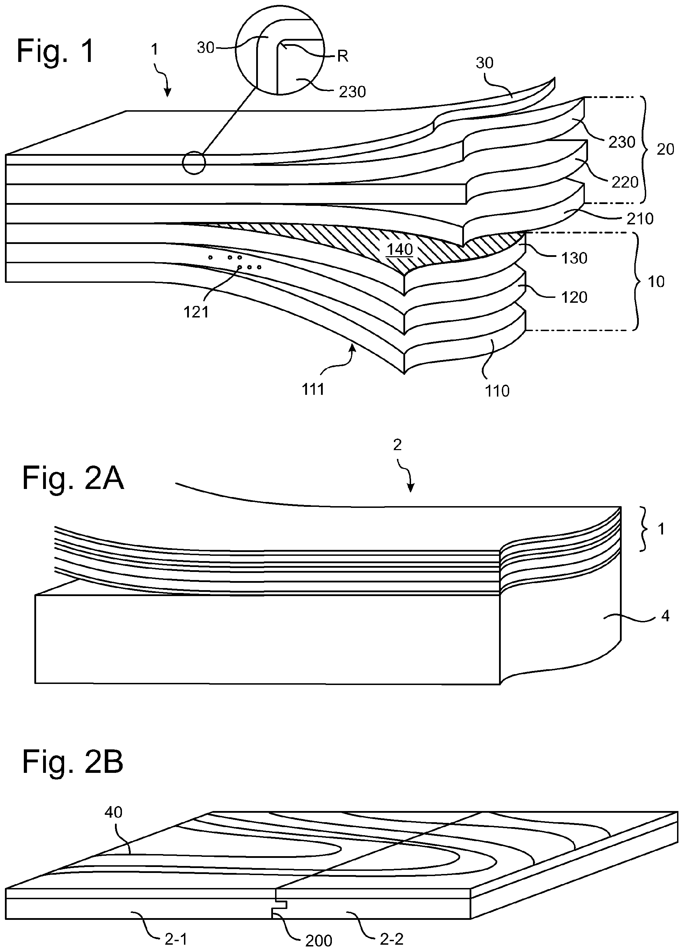

Figur 1 schematisch den prinzipiellen Aufbau einer Folie gemäß einer Ausführungsform der vorliegenden Erfindung, insbesondere eine Folie 1 zur Bildung eines Plattenmaterials durch Aufbringen der Folie auf ein Substrat. Die Folie 1 umfasst eine Dekorschichtgruppe 10, welche wiederrum eine Verbindungsschicht 110, Dekorgrundschicht 120 und eine Dekorschicht 130 umfasst. Die Verbindungsschicht 110 wird mit einem Substrat zur Bildung von Plattenmaterials verbunden und kann teilweise, vorzugsweise vollständig, ein Polypropylen (PP) - Block-Copolymer, Random Copolymer, Terpolymer oder Elastomer umfassen.

Die äußere Oberfläche 111 der Verbindungsschicht 110 der Dekorschichtgruppe 10 kann polarisiert, radikalisiert, und/oder Corona-vorbehandelt sein. Damit kann mit der richtigen Polymerauswahl der Verbindungsschicht 110 eine gute Haltbarkeit der Vorbehandlung und eine gute Benetzbarkeit mit einen ggf. später zum Einsatz kommenden Primer oder Klebstoffsystem erzielt werden. Generell, stellt die Verbindungsschicht 110 eine gute Verklebbarkeit bzw. eine gute thermische Laminierbarkeit bereit. Das letztgenannte Laminieren umfasst dabei üblicherweise ein Aufschmelzen der Kontaktfläche zu einem heißen Substrat, bspw. einer Polypropylen-, PP-, Platte, um so ein thermisches Verschmelzen der beiden Kontaktflächen zu erzielen.

Als Ausgangsmaterialien für Verbindungsschicht 110 kommen vorzugsweise PP - Block-Copolymere, Random Copolymer, Terpolymer oder Elastomer für eine gute Haltbarkeit der Korona-Vorbehandlung und eine gute Benetzbarkeit mit einem Primer sowie gute Verklebbarkeit generell, PP-Homopolymer sowie Abmischungen der genannten PP-Polymertypen für die gewünschte Steifigkeit und Materialstabilität generell, ein oder mehrere UV-Stabilisator(en) um wenigstens gegen eine UV-Belastung im Innenbereich gerüstet zu sein und um ein Vergilben und Verspröden zu verhindern, und/oder ein Antiblock-Additiv um beim Aufwickeln, Lagern und Verarbeiten der Folie 1 ein Verblocken zu vermeiden, zum Einsatz.

Die Dekorgrundschicht 120 der Dekorschichtgruppe 10 ist auf der Verbindungsschicht 110 angeordnet. Die Dekorgrundschicht 120 kann zumindest teilweise einen Polyolefin-basierten Kunststoff, vorzugsweise Polypropylen, aufweisen. Die Dekorgrundschicht 120 kann außerdem eine farbgebende Komponente 121 aufweisen. Insbesondere kann als Ausgangsmaterial eine Polypropylen-Mischung aus Block-Copolymer für die Zähigkeit sowie Homopolymer und Füllstoffen wie z.B Talkum und/oder Kreide für die Steifigkeit und thermische Stabilität im Druckprozess verwendet werden. Des Weiteren können Additive wie bspw. UV-Stabilisatoren mit einer Farbkomponente wie bspw. Titandioxid zum Einsatz kommen. Allgemeine soll diese Schicht eine sowohl gute Satinierbarkeit (z. B. durch eine mechanische Glättung der Folie für eine optimale Bedruckbarkeit im Prozess der Folienherstellung), als auch eine zufriedenstellende mechanische Belastbarkeit während des Druckens, inkl. eine ausreichende Widerstandsfähigkeit im Zusammenhang einer thermischen Belastung beim Trocknen der Druckfarben und der Bahnspannung, bereitstellen.

Die Dekorschichtgruppe 10 umfasst des Weiteren eine Dekorträgerschicht 130 auf der Dekorgrundschicht 120. Die Dekorträgerschicht 130 kann zumindest teilweise, vorzugsweise vollständig, einen Block-Copolymer und/oder PP-Homopolymer sowie ein oder mehrerer UV-Stabilisatoren umfassen. Generell soll eine gute Satinierbarkeit, eine glatte Oberfläche, sowie eine gute Bedruckbarkeit bereitgestellt werden. Als Ausgangsmaterialien können ein Block-Copolymer für eine gute Haltbarkeit der Korona-Vorbehandlung und dadurch eine gute Benetzbarkeit beim Drucken zum Einsatz kommen. Ferner kann so eine gute Prägbarkeit, Satinierung und Glättung der Oberfläche für die Bedruckbarkeit erreicht werden. Des Weiteren können PP-Homopolymer für die gewünschte Steifigkeit und Materialstabilität generell, und/oder ein oder mehrere UV-Stabilisator(en) um wenigstens gegen eine UV-Belastung im Innenbereich gerüstet zu sein und um ein Vergilben und Verspröden zu verhindern, und/oder ein Antiblock-Additiv um beim Aufwickeln, Lagern und Verarbeiten der Folie 1 ein Verblocken zu vermeiden, zum Einsatz kommen.

Die Dekorschichtgruppe 10 umfasst des Weiteren eine Dekorschicht 140 auf der Dekorträgerschicht 130. Die Dekorschicht 140 muss nicht als zusammenhängende Schicht vorhanden sein sondern bezeichnet lediglich ein Dekor auf der der Dekorträgerschicht 130 in Form eines Dekors oder eines Drucks, d.h. einer Schicht oder einem Bereich, in welchem wenigstens teilweise eine Farbe oder Farbpigmente angeordnet sind. Insbesondere kann Dekorschicht 140 aus einem bedruckten Bereich der Dekorträgerschicht 130 bestehen. Die Dekorschicht 140 kann dabei einen Farbstoff in einem Casein-, Polyurethan- oder Acryl-basierten Bindemittel umfassen, und als Wasser- und/oder org. Lösungsmittel-basiertes Farbsystem in gängigen Druckverfahren wie Tiefdruck oder Digitaldruck gebildet werden.

Generell kann die vorbeschriebene Dekorschichtgruppe 10 als Komponente gefertigt werden, was insbesondere bei der Herstellung auch die Bedruckbarkeit, d.h. das Ausbilden des Dekors bzw. der Dekorschicht vereinfachen kann. Da insbesondere die Teilschichten 110, 120 und 130 der Dekorschichtgruppe 10 jeweils extrudierte oder gegossene Schichten sein können, unterscheidet sich deren Herstellung von der Ausbildung des Dekors. Während die Herstellung die Teilschichten 110, 120 und 130 der Dekorschichtgruppe 10 üblicherweise in einem Koextrusions-Walzgerüst erfolgt, kann der Druck mit anderen, für eben den Druck optimierte Vorrichtungen erfolgen. So kann der erfindungsgemäße Aufbau der Folie 1 es ermöglichen, die Dekorschichtgruppe 10 zu fertigen, dann in einer separaten Vorrichtung zur Ausbildung der Dekorschicht 140 zu bedrucken, und sie danach mit den weiteren Komponenten der Folie zu verbinden.

Die Folie 1 umfasst ferner eine Verschleißschutzgruppe 20 auf der Dekorschicht 140 der Dekorschichtgruppe 10. Die Verschleißschutzgruppe 20 umfasst dabei eine weitere Verbindungsschicht 210 auf der Dekorschicht 140, eine transparente Grundschicht 220 auf der weiteren Verbindungsschicht 210, und eine geprägte Oberflächenschicht 230 auf der transparenten Grundschicht 220. Generell kann die Prägung aber nicht allein in der Schicht 230 vorliegen, sondern auch in der transparenten Grundschicht 220 sowie anderen Schichten.

Die weitere Verbindungsschicht 210 der Verschleißschutzgruppe 20 kann ein thermoplastisches Elastomer, einen Polyolefin-basierten Kunststoff, Polypropylen und/oder Polyethylen aufweisen. Die weitere Verbindungsschicht 210 kann des Weiteren einen Haftvermittler (HV), vorzugsweise Maleinsäureanhydridgepropftes Polypropylen oder Polyethylen aufweisen. Generell kann die Verbindungsschicht 210 eine Verbindung zwischen der Verschleißschutzgruppe 20 und der bedruckten Dekorschichtgruppe 10 unter guter Haftung, Langlebigkeit, und Temperaturbeständigkeit bereitstellen. Als Ausgangsmaterialen können bspw. Maleinsäureanhydrid (MSA, MAH) - gepfropfte Elastomere, Polypropylen (PP), und/oder Polyethylen (PE), zum Einsatz kommen. Dabei kann insbesondere Maleinsäureanhydrid eine chemische Bindung mit dem Bindemittel der Druckfarbe als Teil der Dekorschicht 140 der Dekorschichtgruppe 10 eingehen, um so eine dauerhafte Haftung zwischen der Verschleißschutzgruppe 20 und der Dekorschichtgruppe 10 zu erzielen. Weiterhin kann die Oberflächenenergie der Verbindungsschicht 210 erhöht werden, was zusätzlich zu einer physikalischen Haftung führt.

Obwohl auch ein Elastomer allein eine gewisse Haftung eingehen kann, gilt grundsätzlich, dass je höher die Menge des MAH, desto besser die Haftung. Auch das Trägermaterial, die Art und Weise mit der das MAH aufgepfropft wird und wie viel MAH zur Reaktion "verfügbar" ist sind maßgeblich Punkte. MAH-Haftvermittler kann wie in diesem Fall abgemischt werden, wenn er als Konzentrat vorliegt oder aber auch zu 100% verwendet werden. Auch Prozessparameter wie Verarbeitungstemperatur und Druck im Walzenspalt in dem die Verschleißschutzgruppe 20 und Dekorschichtgruppe 10 verbunden werden sowie eine nachträgliche Konditionierung bei Temperaturen über Raumtemperatur haben Einfluss auf die spätere Haftung. Weiterhin hat der Haftungspartner "Druckfarbe" Einfluss auf die Haftung. Hier ist ein PU-Bindemittel einem Casein-Bindemittel deutlich überlegen.

Die Verschleißschutzgruppe 20 umfasst des Weiteren eine transparente Grundschicht 220 auf der weiteren Verbindungsschicht 210. Die transparente Grundschicht 220 der Verschleißschutzgruppe 20 ist auf der weiteren Verbindungsschicht 210 ausgebildet. Die transparente Grundschicht 220 kann zumindest teilweise, vorzugsweise vollständig, einen Random Copolymer aufweisen. Generell weist diese Schicht eine gute Prägbarkeit mit verschiedenen Strukturen wie bspw. Holz- oder Stein-Mustern, gute Eigenschaften gegen Abrieb, sowie eine gute Transparenz zur Dekorschichtgrupp 10 auf. Insbesondere ist so das Dekorbild der Dekorschicht 140 gut zu sehen, was insbesondere dem visuellen Eindruck der Folie 1 zuträglich ist. Als Ausgangsmaterialien können hier ein PP-Random-Copolymer, ein PP-Homopolymer, ein Block-Copolymer oder Abmischungen davon für eine gute Prägebarkeit und Transparenz, einen Elastomer, um die Prägbarkeit weiter zu erhöhen, ein Kombi-Batch aus einem UV-Stabilisator und einem UV-Absorber, um sowohl die Folie 1 an sich vor Vergilbung und Versprödung zu schützen, als auch um das Druckbild unter der Folie, d.h. im Wesentlichen die Dekorschicht 140 der Dekorschichtgruppe 10 vor UV-Strahlung zu schützen (UV-Absorber), zum Einsatz kommen.

Die Verschleißschutzgruppe 20 umfasst des Weiteren eine Oberflächenschicht 230 auf der transparenten Grundschicht 220. Die transparente Grundschicht 220 kann gegenüber der Oberflächenschicht 230 weicher sein und vorzugsweise ein Elastomer aufweisen. Dabei kann auch die transparente Grundschicht 220 ein Elastomer aufweisen und beide Schichten 230 und 220 werden (zusammen) geprägt. Die Oberflächenschicht 230 kann ferner eine Prägung unterschiedlicher Struktur und Tiefe aufweisen, deren Kanten einen Beugungsradius von mindestens 10 µm aufweisen (siehe Radius "R" im Inset zu Figur 1). Damit kann in vorteilhafter Weise eine konturtreue Beschichtung mit einem Lack erfolgen. Generell kann so eine gute Prägbarkeit mit verschiedenen Strukturen wie bspw. Holz- oder Stein-Mustern, eine gute Lackierbarkeit, und eine hohe Abriebfestigkeit erzielt werden. Als Ausgangsmaterialien können ein Block Copolymer für eine gute Haltbarkeit einer Corona-Vorbehandlung und dadurch eine gute Lackierbarkeit, sowie Vorteile beim Prägen der Oberfläche, ein Elastomer, um durch diesen weichen Rohstoff das Prägen der Oberfläche zu verbessern, ein oder mehrere UV-Stabilisatoren, um wenigstens für die UV-Belastung im Innenbereich ausgerüstet zu sein und um ein Vergilben und Verspröden zu verhindern, sowie ein Antiblock, um beim Aufwickeln ein Verblocken zu vermeiden, zum Einsatz kommen.

Die Folie 1 umfasst ferner eine Lackschicht 30 auf der geprägten Oberflächenschicht 230 der Verschleißschutzgruppe 20. Vorzugsweise weist die Lackschicht 30 eine oder mehrere Lagen eines Excimerlacks auf. Eine derartige Beschichtung mit einem UV-Lack kann eine Kratzbeständigkeit, eine matte Optik, sowie eine Beständigkeit gegen Chemikalien bereitstellen. Vorzugsweise ist die Lackschicht 30 mit einer Auftragsmenge von ≥ 10 g/m² vorgesehen. Das spezielle Excimer - Aushärteverfahren für die Lackschicht 30 bringt eine Faltung der Lackoberfläche vor der Aushärtung mit sich. Diese Faltung erzeugt eine besonders matte Oberfläche.

Allgemein kann die Folie 1 des Weiteren eine Primer-Schicht auf der Verbindungsschicht der Dekorschichtgruppe umfassen. Dieser Primer kann eine Polyurethan- (PU)Dispersion mit Kieselsteinsäure umfassen, um die Verklebbarkeit mit Klebstoffsystemen auf verschieden Trägersubstrate wie Beispielsweiße Holzwerkstoffe oder Linoleum zu verbessern. Dabei kann eine Auftragsmenge in einem Bereich von 2 bis 10 g/m² in einem getrockneten Zustand betragen.

Figuren 2A & 2B zeigen schematisch den prinzipiellen Aufbau eines Plattenmaterials mit einer Folie gemäß einer Ausführungsform der vorliegenden Erfindung. In Figur 2A ist allgemein ein Plattenmaterial 2 gezeigt, welches eine Folie 1 nach einer der beschriebenen Ausführungsformen sowie ein Substrat 4 aus einem Material mit einer gegenüber der Folie größeren Steifigkeit umfasst. Dabei spielen die Materialstärken (Dicke) der Folie 1 und des Substrats 4 nur eine untergeordnete Rolle und das Substrat soll dabei hauptsächlich die Steifigkeit (Biegesteifigkeit) des Plattenmaterials 2 bereitstellen. Als Materialen für das Substrat 4 können insbesondere Holz, Schicht- oder Multiplex-Holz, Spanplattenholz, Pressspanholz, Platten aus mitteldichter Faser, MDF, Polypropylen (PP), Polyethylen (PE), Rezyklat, und so weiter zum Einsatz kommen. Die Verwendung eines optionalen Primers auf der auf der Verbindungsschicht der Dekorschichtgruppe der Folie 1 kann insbesondere auf die Oberflächen-Eigenschaften des Substrats 4 sowie des verwendeten Klebstoffsystems abgestimmt sein. In vorteilhafter Weise ergibt sich gemäß dieser Ausführungsformen der vorliegenden Erfindung ein stabiles, Kosten- und Gewichts-effizientes, abriebfestes und wiederstandfähiges sowie optisch entsprechend ansprechendes Plattenmaterial.

In Figur 2B ist ein Plattenmaterial in Form von Fußbodenelementen 2-1, 2-2 gezeigt, welche eine Folie 1 nach einer der beschriebenen Ausführungsformen sowie ein Substrat 4 aus einem Material mit einer gegenüber der Folie größeren Steifigkeit umfassen. Es gelten die im Zusammenhang mit Figur 2A genannten Eigenschaften und Möglichkeiten. Als Fußbodenelement soll das Plattenmaterial 2-1, 2-2 eine entsprechenden optischen Eindruck 40 vermitteln, welcher insbesondere durch die Dekorschicht 140 der Dekorträgerschicht 130 der Dekorschichtgruppe 10 in Verbindung mit der Prägung der geprägten Oberflächenschicht 230 der Verschleißschutzgruppe 20 und der Lackschicht 30 auf der geprägten Oberflächenschicht bereitgestellt wird.

In vorteilhafter Weise tragen auch die Eigenschaften der transparenten Grundschicht 220, die optischen Eigenschaften der weiteren Verbindungsschicht 210 sowie die Hintergrundwirkung der Dekorgrundschicht 120 und der Dekorträgerschicht 130 der Dekorschichtgruppe 10 zum optischen Gesamteindruck 40 bei. Des Weiteren kann die farbgebende Komponente 121 der Dekorgrundschicht 120 zu dem optischen Gesamteindruck 40 beitragen. Des Weiteren können die Fußbodenelemente 2-1, 2-2, Nut- bzw. Feder oder andere Befestigungselemente 200 aufweisen, um insbesondere einen ganzen Fußbodenbelag mit dem Plattenmaterial gemäß einer Ausführungsform der vorliegenden Erfindung bereitzustellen. Die Figur 2B zeigt somit eine Ausführung mit einer sog. Klickverbindung. Ein erfindungsgemäßes Plattenmaterial kann aber auch als flexible Rollenware zum Verkleben (ohne ein Klicksystem) ausgeführt sein.

Die beschriebenen Ausführungsformen sollen im Allgemeinen nur dem verbesserten Verständnis der vorliegenden Erfindung diesen. Insbesondere soll diese Beschreibung aber nicht den Schutzumfang einschränken, welcher allein durch die unabhängigen Ansprüche bestimmt wird.

## Patentansprüche

1. Folie zur Bildung eines Plattenmaterials durch Aufbringen der Folie auf ein Substrat, wobei die Folie umfasst:
- eine Dekorschichtgruppe umfassend eine Verbindungsschicht, welche mit dem Substrat zur Bildung des Plattenmaterials verbunden wird, eine Dekorgrundschicht auf der Verbindungsschicht, eine Dekorträgerschicht auf der Dekorgrundschicht, und eine Dekorschicht auf der Dekorträgerschicht;
- eine Verschleißschutzgruppe auf der Dekorschicht der Dekorschichtgruppe, umfassend eine weitere Verbindungsschicht auf der Dekorschicht, eine transparente Grundschicht auf der weiteren Verbindungsschicht, und eine geprägte Oberflächenschicht auf der transparenten Grundschicht; sowie
- eine Lackschicht auf der geprägten Oberflächenschicht der Verschleißschutzgruppe.

2. Folie nach Anspruch 1, des Weiteren umfassend eine Primer-Schicht auf der Verbindungsschicht der Dekorschichtgruppe.

3. Folie nach Anspruch 1 oder 2, wobei die transparente Grundschicht der Verschleißschutzgruppe eine Prägung aufweist.

4. Folie nach einem der Ansprüche 1 bis 3, wobei die Verbindungsschicht der Dekorschichtgruppe zumindest teilweise, ein Block-Copolymer, Random Copolymer, Terpolymer oder Elastomer umfasst.

5. Folie nach Anspruch 4, wobei die äußere Oberfläche der Verbindungsschicht der Dekorschichtgruppe polarisiert, radikalisiert, und/oder Corona-vorbehandelt ist.

6. Folie nach einem der Ansprüche 1 bis 5, wobei die Dekorgrundschicht der Dekorschichtgruppe zumindest teilweise einen Polyolefin-basierten Kunststoff, vorzugsweise Polypropylen, aufweist.

7. Folie nach Anspruch 6, wobei die Dekorgrundschicht eine farbgebende Komponente aufweist.

8. Folie nach einem der Ansprüche 1 bis 7, wobei die Dekorträgerschicht der Dekorschichtgruppe zumindest teilweise, vorzugsweise vollständig, ein Block-Copolymer und/oder PP-Homopolymer umfasst.

9. Folie nach einem der Ansprüche 1 bis 8, wobei die Dekorschicht einen Farbstoff in einem Casein-, Polyurethan- oder Acryl-basierten Bindemittel umfasst und die Dekorschicht als wasser- und/oder org. Lösungsmittel-basiertes Farbsystem in gängigen Druckverfahren wie Tiefdruck oder Digitaldruck aufgebracht wird.

10. Folie nach einem der Ansprüche 1 bis 9, wobei die weitere Verbindungsschicht der Verschleißschutzgruppe ein thermoplastisches Elastomer, einen Polyolefin-basierten Kunststoff, Polypropylen und/oder Polyethylen aufweist.

11. Folie nach Anspruch 10, wobei die weitere Verbindungsschicht einen Haftvermittler, vorzugsweise Maleinsäureanhydrid gepfroptes Polypropylen, aufweist.

12. Folie nach einem der Ansprüche 1 bis 9, wobei die transparente Grundschicht der Verschleißschutzgruppe zumindest teilweise, vorzugsweise vollständig, einen Random Copolymer aufweist.

13. Folie nach einem der Ansprüche 1 bis 12, wobei die Grundschicht der Verschleißschutzgruppe weich gegenüber der Oberflächenschicht ist und vorzugsweise einen Elastomer aufweist.

14. Folie nach einem der Ansprüche 1 bis 13, wobei die geprägte Oberflächenschicht der Verschleißschutzgruppe eine Prägung aufweist, deren Kanten einen Beugungsradius von mindestens 10 µm aufweisen.

15. Folie nach einem der Ansprüche 1 bis 14, wobei die Lackschicht eine oder mehrere Lagen eines Excimerlacks aufweist.

16. Plattenmaterial, aufweisend eine Folie nach einem der Ansprüche 1 bis 15 sowie ein Substrat aus einem Material mit einer gegenüber der Folie größeren Steifigkeit.
